# EUROPEAN PATENT SPECIFICATION

(11) **EP 0 508 245 B1**
(45) Date of publication and mention of the grant of the patent: **08.11.1995**
(21) Application number: 92105383.1
(22) Date of filing: 27.03.1992
(51) Int. Cl.: F24F 5/00, F24D 3/18

(54) **Combined heating and cooling system**
Kombiniertes Heiz- und Kühlsystem
Système combiné de chauffage et de refroidissement

(30) Priority: 09.04.1991 IT MI910306 U; 31.10.1991 IT MI910950 U
(43) Date of publication of application: 14.10.1992
(73) Proprietor: RIELLO CONDIZIONATORI S.p.A., I-37040 Bevilacqua Verona (IT)
(72) Inventor: Riello, Valerio Giordano, I-37045 Legnago (Verona) (IT)
(74) Representative: Perani, Aurelio

(56) References cited:
- DE-A- 2 140 018
- US-A- 2 121 625
- US-A- 2 984 460
- US-A- 3 425 485
- US-A- 3 906 742
- US-A- 4 798 240

## Description

This invention relates to a combined heating and cooling system according to the preamble of claim 1.

It is known that when a dwelling unit is to be heated and also cooled, two independent hydraulic circuits are necessary, in one of which hot water is circulated and in the other of which cold water is circulated.

Therefore, in such heating and cooling systems it is necessary to have a boiler and a cooling unit which are each provided with its own electric and hydraulic supply and its own control system.

During the winter period in which the heating is required, all the rooms of each dwelling unit are to be heated. However, during the summer period in which the cooling is required, some rooms of each dwelling unit, such as bath-room, and other rooms not in often use and so on do not need to be cooled. This requires operating characteristics very different in both the systems as to the capacity, the pump flow rate, the pressure drop, the distribution and so on.

To overcome this disadvantage, systems have been developed which are designed both for heating and cooling purposes by employing always the same hydraulic circuit. In these systems, to the boiler a cooling unit is associated which in the summer period operates for circulating in the single hydraulic circuit the cold water by excluding the boiler and in the winter period is excluded for circulating in this single hydraulic circuit the hot water.

The US-A-2,121,625 discloses a heating and cooling system employing a single heat exchanger both for heating and for cooling. Such heat exchangers are arranged in the rooms to be heated or cooled and are provided with a fan for circulating the air in the rooms. This heating and cooling system comprises a boiler and a conventional cooling apparatus and the heat exchangers are connected both to the boiler and to the cooling apparatus through a single hydraulic circuit formed of two pipes in which ON-OFF valves are arranged. In the winter period hot water coming from the boiler is circulated in the single hydraulic circuit, whereas in the summer period cold water coming from the cooling apparatus circulates in the single hydraulic circuit. This system is designed to be used in multiflat-buildings and the boiler and the cooling apparatus are located in the basement of the building.

The US-A-3,425,485 discloses a control system for a single-pipe air conditioning system in which heated and chilled water is alternately supplied to a plurality of room air handling units. The water supplied to these units is circulated through a heat exchanger in the air handling units by means of a pump which is intermittently operated. The pump is located in the inlet line of each air handling unit and is operated when the room requires coooling and chilled water is available and when the room requires heating and heated water is available.

The above mentioned heating and cooling systems are central heating and cooling systems and comprise a plurality of heat exchangers each of which is arranged in a room of the various dwelling units, and all of which are connected to a single boiler and a single cooling apparatus.

In the last years, in the heating systems for multi-family or little single-family dwelling units a gas-fired boiler is preferably employed which circulates the heating water through the heat exchanger units located in the rooms of the dwelling unit through one hydraulic circuit. The gas-fired boilers can be wall-mounted type or floor-mounted type and are provided also with a heater for the potable hot water.

The present invention aims at meeting these requirements of having the heating in the winter period and the cooling in the summer period by providing a combined heating and cooling module according to claim 1.

The present invention will be described in more detail in connection to the accompanying drawings, wherein:
Fig. 1 diagrammatically shows a preferred embodiment of the cooling module according to the present invention; and
Fig. 2 shows the cooling module of Fig. 1, associated to a wall-mounted gas-fired boiler in order to form the heating and cooling system for multi-family or single-family dwelling units.

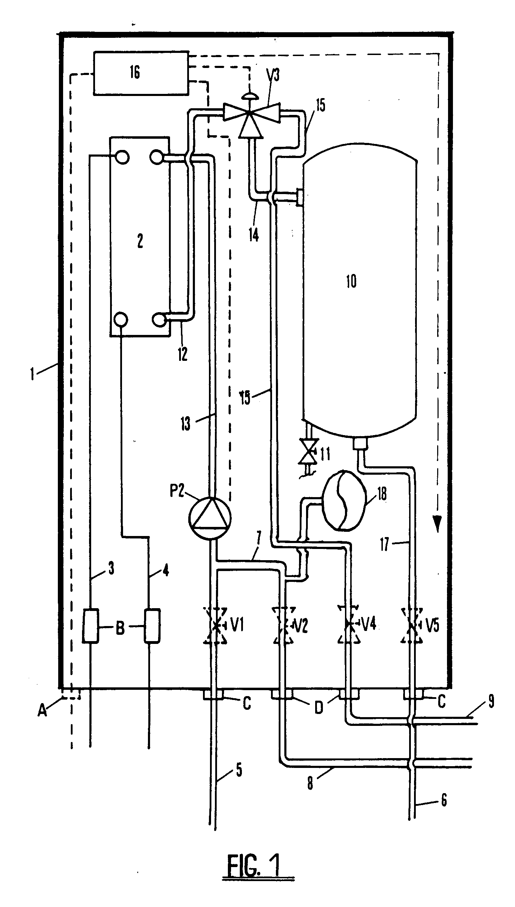

As can be seen in Fig. 1, the present invention comprises a housing 1 containing, in an internal hydraulic circuit, a circulation pump P2 and a heat exchanger 2 acting as an evaporator of a frigorific system and arranged downstream from the circulation pump P2. This heat exchanger 2 is suitably insulated so as to avoid the effects of the condensate on the outer surfaces thereof.

Downstream from the heat exchanger 2 an accumulator 10 is arranged, which is externally insulated. This accumulator 10 is provided with a discharge valve 11. Upstream the accumulator 10 a three-way valve V3 is arranged. This three-way valve V3 is connected to the outlet pipe 12 of the heat exchanger 2 and to the inlet pipe 14 of the accumulator 10 and finally, through the pipe 15, to the supply pipe 9 of the boiler associated with the cooling module. The accumulator 10 is connected to the supply pipe 6 of the single hydraulic circuit leading to the fancoils through the pipe 17. The inlet pipe 13 of the heat exchanger 2 of the cooling module is connected to the return pipe 5 of the single hydraulic circuit leading to the fancoils. Upstream from the circulation pump P2 the inlet pipe 13 is connected, through a pipe 7, to the boiler return pipe 8. This pipe 7 is provided with an expansion tank 18 for compensating the thermal expansions and contractions of the heating/cooling medium.

The cooling module has also a pair of quick-coupling fittings B for connecting the heat exchanger 2 to an external motor-operated chilling unit MC (which will be described later), as well as a pair of fittings C for the connection of the single hydraulic circuit leading to the fancoils and a pair of fittings D for the connection to the gas-fired boiler.

In the pipes 7,15 connecting the cooling module to the gas-fired boiler and in the pipes 5,6 of the cooling module leading to the fancoils ON-OFF valves V2 and V4, V1 and V5, respectively, are disposed.

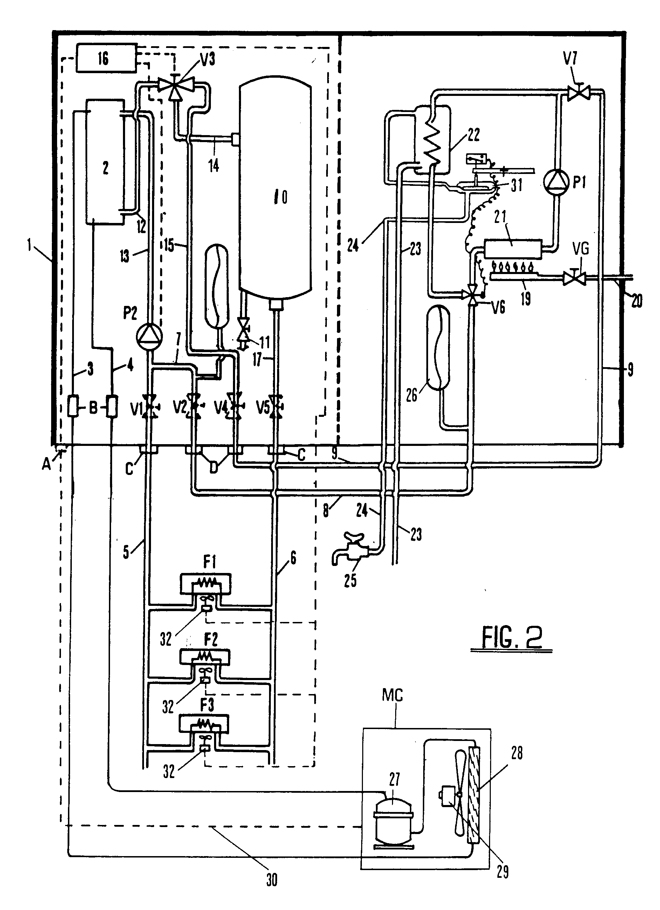

As already said, the heat exchanger 2 of the cooling module is connected to an external motor-operated chilling unit MC (Fig. 2), by means of a supply conduit 3 and a return conduit 4 through the quick-coupling fittings B. This motor-operated chilling unit MC comprises a compressor 27, a condenser 28 and a fan 29 of a frigorific system. The supply and return conduits 3,4 connecting the motor-operated chilling unit MC to the heat exchanger 2 of the cooling module are preferably enclosed in a flexible tube. Also in this flexible tube an electric cable 30 is included for the electrical connection of the motor-operated chilling unit MC to a central control unit 16 included in the cooling module which, to this purpose, is provided with an electric connector A.

The central control unit 16 is provided for controlling, in addition to the external motor-operated chilling unit MC, also the three-way valve V3, the circulation pump P2 and the fans 32 of the fancoils, as shown by dotted lines in Fig. 2.

In Fig. 2 the present invention is shown using a wall-mounted gas-fired boiler.

As known, the boilers of this type include an internal hydraulic circuit in which there are disposed a heat exchanger 21, a set of burners 19 which are fed by the gas coming from the pipe 20 in which an ON-OFF valve VG is arranged, a circulating pump P1, a hot water heater 22 for the domestic hot water which enters the pipe 23 and flows out from the pipe 24 through the cock 25, an expansion tank 26 and a three-way valve V6, as well as an ON-OFF valve V7 for excluding the boiler during the summer period. The boiler comprises also the supply pipe 9 and the return pipe 8 for connecting it to the cooling module. The three-way valve V6 is controlled by a transducer 31 inserted in the outlet pipe 24 of the domestic hot water heater 22. This transducer 31 automatically switches the three-way valve V6 so as to communicate the hot water flowing out the heat exchanger 21 to the hot water heater 22 whenever the cock 25 is opened for the delivery of the domestic hot water.

In order to associate to the gas boiler the cooling module according to the present invention, the boiler supply pipe 9 is connected to the pipe 15 of the cooling module and the boiler return pipe 8 is connected to the pipe 7 of the cooling module and this through the fittings D.

The external motor-operated chilling unit MC is connected to the conduits 3 and 4 leading to the cooling module through the quick-coupling fittings B and is connected to the central control unit 16 through the electric connector A.

The cooling module is connected to the supply and return pipes 5 and 6 of the single hydraulic circuit leading to the fancoils F1,F2,F3... through the fittings C.

Once these connections have been made, the unit comprised of gas boiler and cooling module is ready to operate either in the winter period or in the summer period.

### OPERATION IN THE WINTER PERIOD

During the winter period the gas boiler operates for heating the rooms of each multi-family or single-family dwelling unit and the water contained in the single hydraulic circuit 5,6 leading to the fancoils F1,F2,F3... is circulated by the pump P1 delivering it through the heat exchanger 21 provided with the set of burners 19 and then both to the hot water heater 22 for the domestic hot water and to the boiler supply and return pipes 9,8 leading to the cooling module, through the ON-OFF valves V7 and V4 which are now ON. The water flowing out from the hot water heater 22 returns, through the three-way valve V6, to the heat exchanger 21.

The three-way valve V3 of the cooling module is now switched so as to communicate the boiler supply pipe 9 through the valve V4 and the pipe 15 of the cooling module, to the accumulator 10 which is filled with hot water and so acts as a hot water accumulator. This hot water flows out from the accumulator 10 through the pipe 17 and the valve V5 and enters the supply pipe 6 of the hydraulic circuit leading to the fancoils F1,F2,F3..., whereas the return pipe 5 of this hydraulic circuit is connected through the pipe 7 and the valve V2 to the boiler return pipe 8. The hot water then can circulate in the fancoils F1,F2,F3... and therefore heats the rooms, while the cooling unit contained in the module according to the present invention is cut off by the three-way valve V3. The central control unit 16 does not energize the pump P2 and the external motor-operated chilling unit MC.

### OPERATION IN THE SUMMER PERIOD

During the summer period the ON-OFF valve V7 of the gas boiler is OFF and the motor-operated chilling unit MC connected to the heat exchanger 2 of the cooling module is operated by the central control unit 16 so as to circulate the frigorific fluid in the heat exchanger 2 through the supply and return conduits 3 and 4. The three-way valve V3 of the cooling module is switched by the central control unit 16 so as to connect the outlet pipe 12 of the heat exchanger 2 to the accumulator 10 through the pipe 14. The central control unit 16 operates the pump P2 so as the accumulator 10 is filled with the cold water cooled by the heat exchanger 2. The accumulator 10 acts now as an accumulator of cold water which flows out through the pipe 17 and the valve V5 for entering the supply pipe 6 of the hydraulic circuit leading to the fancoils F1,F2,F3.... The valve V7 is closed to cut off the boiler supply pipe 9 and so the hot water coming from the heat exchanger 21 can flow only in the hot water heater 22 of the domestic hot water also in the summer period whenever it is taken from the cock 25. The operation of the pump P2 causes the circulation of the cold water, cooled by the heat exchanger 2, in the hydraulic circuit leading to the fancoils F1,F2,F3.... The cold water, after being flowed through the fancoils F1,F2,F3... is returned through the return pipe 5 to the cooling module in order to be recirculated through the heat exchanger 2 by the pump P2.

Since the fans 32 of the fancoils F1,F2,F3... are separately operated by the central control unit 16, there is the possibility to cool in the summer period either all the rooms of the multi-family or single-family dwelling unit or only those rooms wherein people is living. For example, during the day only the living room can be cooled by operating the fan 32 of the fancoil located in the living room and during the night only the bed room can be cooled by operating the fan 32 of the fancoil located in the bed room, while the cold water is circulated in all the fancoils.

Of course, the cooling module includes in a manner per se known also all the safety devices required by the accident prevention specifications, and a safety device preventing the operation of the motor-condensing unit MC if the pump P2 is not operating.

The cooling module is provided with conventional means for mounting it to a wall if it is to be connected to wall-mounted gas-fired boilers (tipical of a multi-family heating system) or is provided with conventional means for mounting it to a floor if it is to be connected to floor-mounted gas-fired boilers (typical of a single family heating system). Alternatively, the cooling module of the present invention can be enclosed in a single common housing 1 so as to form an integrated appliance which combines room heating and cooling and potable water heating in a single compact package and which provides these functions with a minimum operating cost.

The advantages offered by the combined heating and cooling system according to the present invention are the following:
The cooling module can be enclosed in a single common housing together with the boiler, preferably a gas-fired boiler, so as to improve the aesthetical appearence of the heating and cooling system of the multi-family or single-family dwelling unit and to form an integrated appliance which combines room heating and cooling and potable water heating in a single compact package.
Since the motor-operated chilling unit, which is a source of noise, is located outside there are no problems of freezing of the connecting pipes during the winter period, because they do not contain water, but frigorific fluid which does not freeze.
The provision of an accumulator of hot and cold water permits a greater flexibility of the heating and cooling system and a correct operation both of the boiler in the winter period and of the cooling module in the summer period.
The possibility to mount the cooling module to a wall when it is employed together with a wall-mounted boiler, preferably a gas-fired boiler or to mount the cooling module on the floor when it is employed together with a floor-mounted boiler, preferably a gas-fired boiler.
The possibility of operating the fans of the fancoils separately from each other for cooling only the rooms in which people are living, thus saving operating costs of the heating and cooling system of the multi-family or single-family dwelling unit.

## Claims

1. A combined heating and cooling system, comprising:
- a cooling module associated with a boiler, preferably a gas-fired boiler of an independent heating system for multi-family or little single-family dwelling units;
- a plurality of fancoils (F1, F2, F3 ...) which can act as heating and cooling terminals;
- a single hydraulic circuit (5,6) leading to said terminals, whereby said cooling module comprises:
- a heat exchanger (2) provided with an inlet pipe (13) and an outlet pipe (12), and which acts as an evaporator of a motor operated chilling unit (MC) arranged outdoors by means of connections (B, 3, 4);
- a circulation pump for the cold water;
- an accumulator (10) provided with an inlet pipe (14) and an outlet pipe (17);
- connecting means (D) for connecting said cooling module to said boiler through a supply pipe (15) and a return pipe (7) and;
- stop-valve means (V2, V4) placed in the supply pipe (7);
- stop-valve means (V1, V5) in the connection from the cooling module to the said single hydraulic circuit;
characterized in that said cooling module further includes a three-way switching valve (V3) connected to the outlet pipe (12) of said heat exchanger (2), to the inlet pipe (14) of said accumulator (10) and to the supply pipe (15) from said boiler, whereby said accumulator (10) is connected to said single hydraulic circuit in both the cooling and the heating operative mode of the system.

2. A combined heating and cooling system according to claim 1, characterized in that it further comprises a central control unit (16) for controlling said circulation pump (P2), said switching valve (V3), said external motor-operated chilling unit (MC) and the fans (32) of the fancoils (F1,F2,F3...).

3. A combined heating and cooling system according to claim 2, characterized in that said central control unit (16) includes conventional means for separately controlling each of said fans (32) of the fancoils (F1,F2,F3...).

4. A combined heating and cooling system according to claim 1, characterized in that said heat exchanger (2) is of the counterflow water-frigorific fluid type.

5. A combined heating and cooling system according to claim 1, characterized in that said heat exchanger (2) is a plate type heat exchanger.

## Patentansprüche

1. Kombiniertes Heiz- und Kühlsystem mit:
- einem Kühlmodul in Verbindung mit einem Boiler, vorzugsweise einem gasbeheiztem Boiler eines unabhängigen Herzsystems für Vielfamilien- oder kleinen Einfamilienwohneinheiten,
- mehrere Ventilator-Schlangen (F1, F2, F3 ...), die als Wärme- und Kühlanschlüsse dienen können,
- einem einzigen Hydrokreislauf (5, 6), der zu den Anschlüssen führt,
- wobei das Kühlmodul aufweist:
- einen Wärmetauscher (2) mit einem Einlaßrohr (13) und einem Auslaßrohr (12), der als Verdampfer einer motorbetriebenen Abkühleinheit (MC) dient, die mittels Verbindungen (B, 3, 4) im Freien angeordnet ist,
- eine Kreislaufpumpe für das kalte Wasser,
- einen Sammelbehälter (10) mit einem Einlaßrohr (14) und einem Auslaßrohr (17),
- Verbindungen (D) des Kühlmoduls mit dem Boiler durch ein Versorgungsrohr (15) und ein Rücklaufrohr (7), und
- eine Absperrventileinrichtung (V2, V4), die in dem Versorgungsrohr (7) vorgesehen ist,
- eine Absperrventileinrichtung (V1, V5) in der Verbindung von dem Kühlmodul zu dem einzigen Hydrokreislauf,
**dadurch gekennzeichnet,**
daß das Kühlmodul weiterhin ein Dreiwegeventil (V3) aufweist, das mit dem Auslaßrohr (12) des Wärmetauschers (2), dem Einlaßrohr (14) des Sammelbehälters (10) und dem Versorgungsrohr (15) von dem Boiler verbunden ist, wobei der Sammelbehälter (10) sowohl in der Betriebsart des Heizens als auch in der Betriebsart des Kühlens des Systems mit dem einzigen Hydrokreis verbunden ist.

2. Kombiniertes Heiz- und Kühlsystem nach Anspruch 1,
**dadurch gekennzeichnet,**
daß es eine zentrale Steuereinheit (16) zur Steuerung der Kreislaufpumpe (P2), des Schaltventils (V3), der externen, motorbetriebenen Kühleinheit (MC) und der Ventilatoren (32) der Ventilatorschlangen (F1, F2, F3...) aufweist.

3. Kombiniertes Heiz- und Kühlsystem nach Anspruch 2,
**dadurch gekennzeichnet,**
daß die zentrale Steuereinheit (16) eine herkömmliche Einrichtung zur separaten Steuerung von jedem der Ventilatoren (32) der Ventilatorschlangen (F1, F2, F3...) aufweist.

4. Kombiniertes Heiz- und Kühlsystem nach Anspruch 1,
**dadurch gekennzeichnet,**
daß der Wärmetauscher (2) von dem Wasser-Kuhlmittel-Gegenstrom-Typ ist.

5. Kombiniertes Heiz- und Kühlsystem nach Anspruch 1,
**dadurch gekennzeichnet,**
daß der Wärmetauscher (2) ein Wärmetauscher vom Plattentyp ist.

## Revendications

1. Système combiné de chauffage et de refroidissement, comprenant:
- un module de refroidissement associé à une chaudière, de préférence une chaudière à gaz d'un système de chauffage indépendant pour des unités d'habitation pour multiple famille ou pour des petites pour une famille simple;
- une pluralité de batteries ventilées (F1, F2, F3...) qui peuvent agir comme terminaux de chauffage et de refroidissement;
- un seul circuit hydraulique (5, 6) conduisant auxdits terminaux, ledit module de refroidissement comprenant:
un échangeur de chaleur (2) muni d'un conduit d'entrée (13) et d'un conduit de sortie (12), et qui agit en tant qu'évaporateur d'une unité réfrigérante (MC) actionnée par moteur placée à l'éxterieur au moyen de connexions (B, 3, 4);
une pompe de circulation pour l'eau froide;
un accumulateur (10) muni d'un conduit d'entrée (14) et d'un conduit de sortie (17),
- des moyens de connexion (D) pour connecter ledit module de refroidissement à ladite chaudière par l'intermédiaire d'un conduit d'alimentation (15) et d'un conduit de retour (7) et;
- des moyens formant vanne d'arrêt (V2, V4) placés sur le conduit d'alimentation (7);
des moyens formant vanne d'arrêt (V1, V5) placés sur la connexion entre le module de refroidissement et ledit unique circuit hydraulique;
caractérisé en ce que ledit module de refroidissement comprend de plus une vanne de commutation trois voies (V3) connectée au conduit de sortie (12) dudit échangeur de chaleur (2), au conduit d'entrée (14) dudit accumulateur (10) et au conduit d'alimentation (15) de ladite chaudière, ledit accumulateur (10) étant connecté audit unique circuit hydraulique dans les modes à la fois de chauffage et de refroidissement du système.

2. Système combiné de chauffage et de refroidissement selon la revendication 1, caractérisé en ce qu'il comprend de plus une unité de commande centrale (16) pour contrôler ladite pompe de circulation (p2), ladite vanne de commutation (V3), ladite unité réfrigérante externe (MC) actionnée par moteur, et les ventilateurs (32) des batteries ventilées (F1, F2, F3...).

3. Système combiné de chauffage et de refroidissement selon la revendication 2, caractérisé en ce que ladite unité de commande centrale (16) comprend un moyen conventionnel pour contrôler séparément chacun desdits ventilateurs (32) des batteries ventilées (F1, F2, F3...).

4. Système combiné de chauffage et de refroidissement selon la revendication 1, caractérisé en ce que ledit échangeur de chaleur (2) est du type à écoulement inverse eau-fluide frigorifique.

5. Système combiné de chauffage et de refroidissement selon la revendication 1, caractérisé en ce que ledit échangeur de chaleur (2) est un échangeur de chaleur de type à plaques.
